(19) **Europäisches Patentamt / European Patent Office / Office européen des brevets**

(11) **EP 2 282 524 B1**

(12) **EUROPEAN PATENT SPECIFICATION**

(45) Date of publication and mention
of the grant of the patent:
**30.05.2018 Bulletin 2018/22**

(51) Int Cl.:
*H04N 5/262* (2006.01)  *H04N 5/232* (2006.01)
*H04N 5/235* (2006.01)  *H04N 7/01* (2006.01)
*H04N 5/77* (2006.01)  *H04N 9/73* (2006.01)

(21) Application number: **10171727.0**

(22) Date of filing: **03.08.2010**

(54) **Imaging apparatus and information processing apparatus**

Bildgebungsvorrichtung und Informationsverarbeitungsvorrichtung

Appareil d'imagerie et appareil de traitement d'informations

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **07.08.2009 JP 2009185123
09.06.2010 JP 2010132137**

(43) Date of publication of application:
**09.02.2011 Bulletin 2011/06**

(73) Proprietor: **CANON KABUSHIKI KAISHA
Ohta-ku
Tokyo 146-8501 (JP)**

(72) Inventor: **Okubo, Toshiyuki
Ohta-ku Tokyo (JP)**

(74) Representative: **Williamson, Brian
Canon Europe Ltd
European Patent Department
3 Square, Stockley Park
Uxbridge, Middlesex UB11 1ET (GB)**

(56) References cited:
**EP-A2- 1 280 340**

**Description**

BACKGROUND OF THE INVENTION

Field of the Invention

The present invention relates to a technique to use several aspect ratios to record and/or reproduce a captured image

Description of the Related Art

Conventional imaging apparatuses such as video cameras and digital still cameras have a function to record and reproduce a still image and a moving image. Some video and still cameras record an image in an uncompressed mode or a lossless compression mode, and after the image capturing, perform developing processing, so that users can check the result.

Japanese Patent Application Laid-Open No. 2007-110695 discusses a camera that can set various aspect ratios, for example, 4:3, 16:9, and 3:2, and record an image. Further, a function is provided for performing developing processing of an image recorded in an uncompressed mode at an aspect ratio different from that in the recording. Generally, when aspect ratios are changed, a viewing field before the change differs from a viewing field after the change. Accordingly, calculation results of control amounts such as exposure, flash, and white balance also differ from those before the change.

Accordingly, when the image captured, for example, in the uncompressed mode is developed after the recording, if the aspect ratio setting is changed, the following problem occurs. The control amounts such as exposure, flash, and white balance are set for the aspect ratio (for example, 4:3) before the change. Accordingly, if the information is used as they are for developing processing at a different aspect ratio setting (for example, 16:9) after the change, appropriate development results cannot be obtained. Although Japanese Patent Application Laid-Open No. 2007-110695 provides the aspect ratio switching method, it is not possible to solve the above problem.

SUMMARY OF THE INVENTION

The present invention is directed to increase an image quality of a developed image whose aspect ratio is changed after recording.

The present invention provides an imaging apparatus as specified in claims 1 to 7 and a control method as specified in claim 8.

Further features and aspects of the present invention will become apparent from the following detailed description of embodiments with reference to the attached drawings.

BRIEF DESCRIPTION OF THE DRAWINGS

The accompanying drawings illustrate embodiments, features, and aspects of the invention and, together with the description, serve to explain the principles of the invention.

Fig. 1 is a block diagram illustrating an example of a configuration of an imaging apparatus.
Fig. 2 is a flowchart illustrating an example of range-finding/light-metering processing in moving image recording.
Fig. 3 is a flowchart illustrating an example of still image capturing processing.
Fig. 4 is a flowchart illustrating an example of recording processing.
Fig. 5 is a flowchart illustrating an example of reproducing processing.
Fig. 6 is a flowchart illustrating an example of developing processing.
Fig. 7 illustrates aspect ratios of an image.

DESCRIPTION OF THE EMBODIMENTS

Various embodiments, features, and aspects of the invention will be described in detail below with reference to the drawings.

Hereinafter, the embodiments of the present invention will be described with reference to the attached drawings.

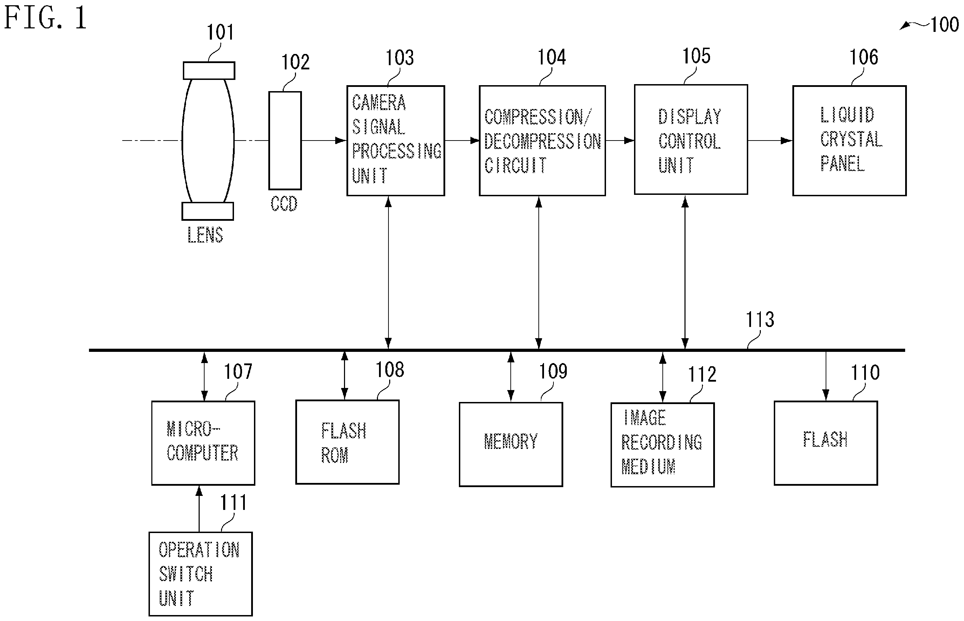

Fig. 1 is a block diagram illustrating an internal configuration of a video camera (imaging apparatus) 100 according to the embodiment of the present invention. The video camera 100 according to the embodiment can capture both of a still image and a moving image.

In Fig. 1, a lens unit 101 includes a stationary lens unit for collecting light, a variable power lens unit, a diaphragm, and a correction lens unit that has functions of correcting a position of a formed image that is moved by movement of the variable power lens unit, and performing focus adjustment. The lens unit 101 finally forms an object image on an image forming plane of a charge coupled device (CCD) 102. The CCD 102 converts light into electrical charge and generates an image signal. Although not shown in the drawings, the lens unit 101 and the CCD 102 form an imaging unit together with a diaphragm member, a gain adjustment circuit, and the like. The imaging unit performs automatic exposure control based on a control amount sent from a microcomputer 107. A camera signal processing unit 103 performs predetermined processing on the imaging signal generated by the CCD 102, and generates digital image data. Further, the camera signal processing unit 103 outputs the data to a compression/decompression circuit 104. The predetermined processing includes white balance processing, color conversion processing, color space conversion processing, gradation conversion processing, contour enhancement processing, and the like.

The compression/decompression circuit 104 compresses digital image data and generates compressed moving image data and compressed still image data. Further, when the compressed moving image data or the compressed still image data is input, the compression/decompression circuit 104 decompresses the compressed moving image data or the compressed still image data.

The microcomputer 107 controls operation of the whole apparatus via a bus 113. A flash read-only memory (ROM) 108 stores programs and the like that are to be implemented by the microcomputer 107. The flash ROM 108, as will be describedbelow, stores photographic information of each aspect ratio. A memory 109 is used as work memory by the microcomputer 107, the compression/decompression circuit 104, or the like.

An image recording medium 112 records the compressed moving image data or the compressed still image data generated in the compression/decompression circuit 104 according to a format compatible with a computer such as a file allocation table (FAT) file system. The microcomputer 107 controls recording and reproduction operation of the image recording medium 112.

A display control unit 105 performs control to display digital image data of a moving image or a still image on a liquid crystal panel 106. The liquid crystal panel 106 displays digital image data. The digital image data to be displayed includes data that is output from the camera signal processing unit during image capturing in real time and not yet recorded, data reproduced from the image recording medium 112, and the like. A flash (stroboscope) 110 is, as will be described below, used for still image capturing. The flash 110 emits light having a predetermined color temperature.

An operation switch unit 111 is operated by users for input. The operation switch unit 111 has switches for selecting a moving image capturing mode, a still image capturing mode, a reproduction mode for reproducing a captured image, or a power-off mode for turning off the power. Using the operation switch unit 111, an instruction for capturing a still image during moving image recording can be input. Further, using the operation switch unit 111, an aspect ratio setting or a compression mode setting that will be described below can be input. The aspect ratio includes some choices such as 4:3, 3:2, and 16:9, from which users can select an aspect ratio. As the compression mode, in the still image capturing, a lossy compression mode that compresses an image in joint photographic experts group (JPEG) format or a lossless compression mode that compresses an image in RAW format can be set. In RAW format, a still image which is not yet processed in the camera signal processing unit 103 is transferred to the compression/decompression circuit 104, and lossless compression is performed, for example, in run-length encoding. The format enables users to implement functions to decompress and develop a captured image without deterioration in image quality and check the result after the image capturing.

Now, a moving image data recording process by the video camera 100 according to the embodiment is described. In response to a user' s operation of the power switch in the operation switch unit 111, the microcomputer 107 controls each unit and enters a recording standby state. In the recording standby state, the camera signal processing unit 103 generates digital moving image data from image signal generated in the CCD 102, and sends the data to the display control unit 105. Based on the digital moving image data generated in the camera signal processing unit 103, the display control unit 105 displays an object image as a so-called through-image on the liquid crystal panel 106.

In the recording standby state, when a recording trigger switch in the operation switch unit 111 is operated, the microcomputer 107 controls each unit to implement recording processing. First, the camera signal processing unit 103 generates digital moving image data from the image signal generated in the CCD 102, and sequentially stores the data on a frame by frame basis on the image recording medium 112. During the processing, the camera signal processing unit 103 simultaneously sends the generated data to the display control unit 105. The microcomputer 107 reads the digital moving image data stored in the image recording medium 112 and sends the data to the compression/decompression circuit 104. The compression/decompression circuit 104 codes the data in motion picture experts group (MPEG) format to generate compressedmoving image data. The microcomputer 107 stores again the data generated by the compression/decompression circuit 104 on the image recording medium 112.

During the moving image data recording, when the recording trigger switch in the operation switch unit 111 is operated, the microcomputer 107 stops the recording on the image recording medium 112. Then, the microcomputer 107 generates the moving image data from the recording start to the recording stop as one MPEG file.

In the embodiment, using the operation switch unit 111, users can set an aspect ratio of a still image when still image data is recorded on the image recording medium 112. More specifically, the aspect ratio can be set from three aspect ratios of a 3:2 aspect mode, a 4:3 aspect mode, and a 16:9 aspect mode.

However, each aspect ratio set in this setting has a different viewing field used in each detection processing. Accordingly, calculation results of control amounts in automatic exposure (AE) processing, automatic white balance (AWB) processing, and pre-flash (EF) processing (electronic flash pre-emission processing) become different. In the embodiment, exposure control information, flash control information, white balance control information, and the like are acquired at an aspect ratio different from the aspect ratio set in the image capturing, and the information is simultaneously recorded on the image recording medium 112 as photographic information.

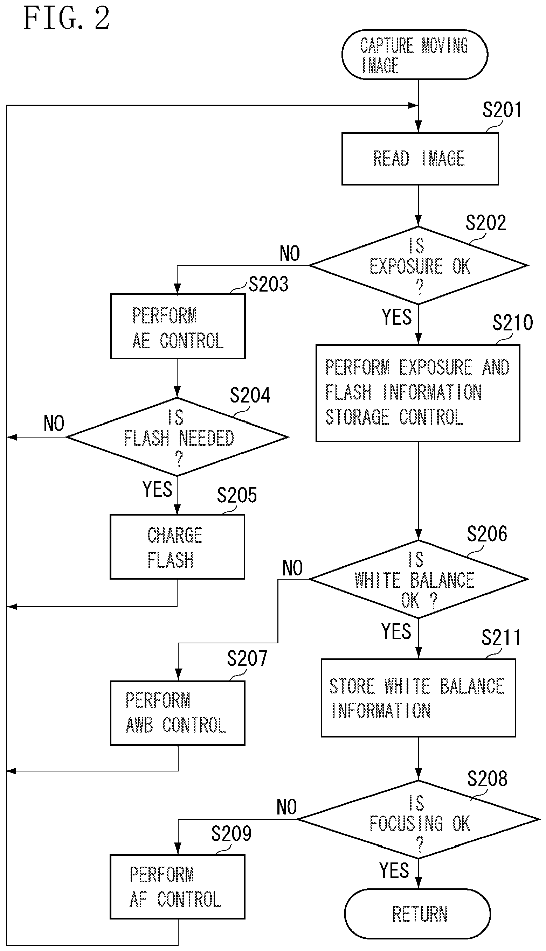

In the embodiment, the above-mentioned recording of the photographic information is described for a case where a still image is captured during moving image capturing as an example. Fig. 2 is a flowchart illustrating an example of various detections and image capturing control when moving image data is captured and recorded. In the above-mentioned recording standby state, similar detections and image capturing control processing are also performed.

First, in step S201, the microcomputer 107 reads out a charge signal from the CCD 102, and sequentially reads and stores the captured image data on the camera signal processing unit 103. Using the sequentially read image data, the camera signal processing unit 103 performs predetermined calculation, which is used in the AE processing, the EF processing, and the AF processing in through-the-lens (TTL) metering.

In each processing, a certain part within the whole captured pixels is cut and extracted as needed, and used for the calculation. In each of the AE, EF, AWB, and AF processing in TTL metering, optimal calculation in each different mode such as a center-weighted mode, an overall mean mode, and an evaluation mode can be performed. Further, based on the aspect ratio set by the user, the extraction area of the image is changed, and the calculation in a desired area is performed. For example, in the center-weighted mode, with respect to 4:3 or 16:9, aspect ratios of detection areas which are regarded as centers, differ from each other. In the overall mean mode, with respect to 4:3 or 16:9, aspect ratios and viewing fields (sizes) of whole areas used for the detection differ from each other.

In step S202, using the calculation results in the camera signal processing unit 103, the microcomputer 107 determines whether the exposure (AE) is appropriate or not. In step S203, as a result of the determination, if it is determined that the exposure is not appropriate, the microcomputer 107 performs the AE control. In step S204, using the external light luminance obtained in the AE control in step S203, the microcomputer 107 determines whether flash is needed or not. As a result of the determination, in step S205, when the flash is needed, the microcomputer 107 sets a flash flag and charges a flash 121. Then, the processing returns to step S201, and the above-described processing is performed.

Meanwhile, as a result of the determination in step S202, when it is determined that the exposure (AE) is appropriate, the processing proceeds to step S210. In step S210, the microcomputer 107 performs exposure and flash information storage control. More specifically, the external light luminance detected in the set aspect ratio, the exposure control amount used for the AE control, and the flash flag are stored on the flash ROM 108. Further, in the processing, exposure and flash information in modes different from the aspect ratio specified by the user is stored. For example, when the user sets the 4:3 recording mode, the microcomputer 107 performs the detection and control of the exposure and flash control in the extraction area in the 4:3 mode. In the 3:2 mode and the 16:9 mode which are not the 4:3 mode, only calculation of the detection and control information is performed, and difference information between the controlled setting values is stored in the flash ROM 108.

In step S206, using the calculation results in the camera signal processing unit 103 and the external light luminance obtained in the AE control, the microcomputer 107 determines whether the white balance (AWB) is appropriate or not. As a result of the determination, when it is determined that the white balance is not appropriate, the processing proceeds to step S207. Then, using the camera signal processing unit 103, parameters in color processing are adjusted and the AWB control is performed. Then, the processing returns to step S201, and the above-described processing is performed.

As a result of the determination in step S206, when it is determined that the white balance (AWB) is appropriate, the processing proceeds to step S211. Then, the microcomputer 107 stores the color temperature and the white balance coefficient in the aspect ratio set by the user on the flash ROM 108. Further, the microcomputer 107 stores white balance information at aspect ratios other than the aspect ratio specified by the user on the flash ROM 108.

In step S208, using the photographic information obtained in the AE control and the AWB control, the microcomputer 107 determines whether focusing (AF) is in an in-focus state or not. As the result of the in-focus determination, if it is determined that the state is not in the in-focus state, the processing proceeds to step S209. In step S209, the AF control is performed. The AF control performed in the processing is implemented by the microcomputer 107 controlling a lens driving unit (not shown). Meanwhile, as a result of the determination in step S208, when it is determined that the state is in the in-focus state, the microcomputer 107 stores information such as the lens position information on the flash ROM 108, and the range-finding/light-metering processing ends. Then, the processing returns to a main routine (not shown).

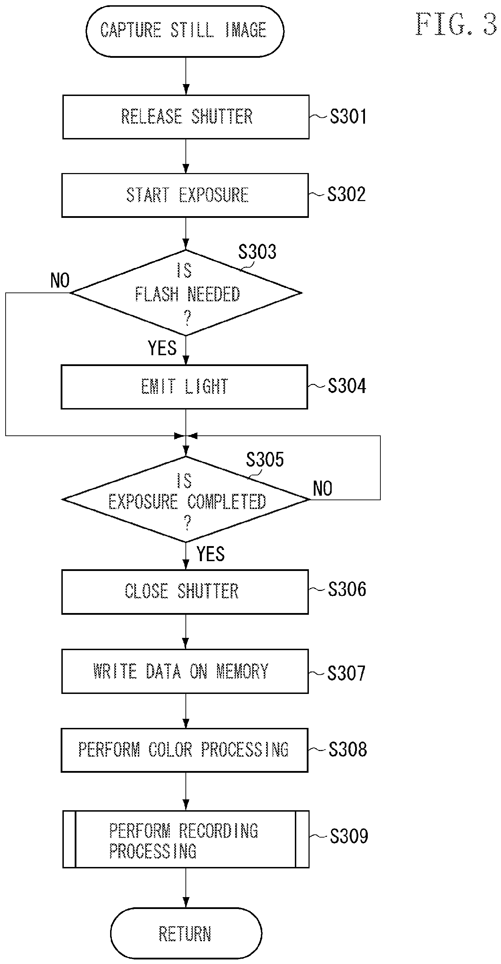

Fig. 3 is a flowchart illustrating an example of a detailed procedure when an instruction for still image capturing processing is issued while the moving image capturing operation in Fig. 2 is being performed. The instruction for still image capturing processing is input by fully pressing (SW2 operation) a still image release button provided in the operation switch unit 111. In response to the input of the instruction, in steps S301 and 302, the microcomputer 107 performs exposure control according to the exposure information stored in the flash ROM 108. Then, the microcomputer 107 controls the lens unit 101 that has a diaphragm function, to open an aperture based on a diaphragm value and the CCD 102 is exposed.

In step S303, with the flash flag, the microcomputer 107 determines whether flash is needed or not. As a result, if it is determined that the flash is needed, the processing proceeds to step S304, and the light of the flash is emitted. Then, the processing proceeds to step S305. As a result of the determination in step S303, if it is determined that the flash is not needed, the processing directly proceeds from step S303 to step S305.

In step S305, the microcomputer 107 waits for completion of the exposure of the CCD 102 according to the exposure information. When the microcomputer 107 determines that the exposure is completed, the processing proceeds to step S306, and the shutter of the lens unit 101 is closed. Then, the processing proceeds to step S307. In step S307, the microcomputer 107 performs control such that the CCD 102 reads the charge signal and the camera signal processing unit 103 processes the captured image. Then, the data is written on the image recording medium 112.

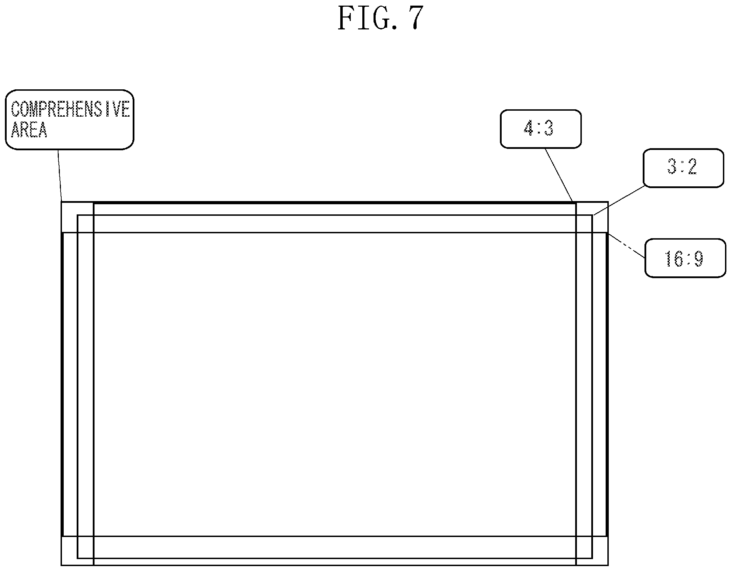

In the processing, when the compression rate is set to the lossless compression mode, the aspect ratio of the captured image data is not the area set by the user, and an image of an area, for example, the area shown in Fig. 7, that includes all aspect modes is written. In step S308, the camera signal processing unit 103 sequentially performs the color processing based on the set image capturing mode. After the processing is completed, the processing proceeds to step S309. In step S309, the microcomputer 107 writes the processed image data on the image recording medium 112. When a series of the processing is completed, the image capturing processing routine ends, and the processing returns to the main routine shown in Fig. 2.

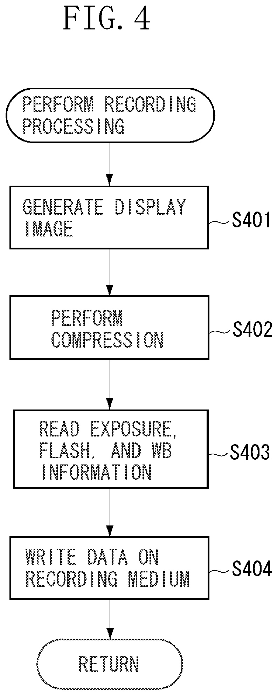

Fig. 4 is a flowchart illustrating detailed procedure of the recording processing in step S309 in Fig. 3. In step S400, the microcomputer 107 reads the image data written on the image recording medium 112, and controls the camera signal processing unit 103 such that the camera signal processing unit 103 performs developing processing on the image data read based on the information corresponding to the aspect ratio set by the user. Then, the microcomputer 107 controls the camera signal processing unit 103 such that the image developed by the camera signal processing unit 103 is reduced to an image size suitable for display. Further, the microcomputer 107 creates an image for display by controlling the compression/decompression circuit 104 such that the reduced image is compressed in JPEG format. In step S402, the microcomputer 107 reads the image data written on the image recording medium 112. When the set mode is the lossless compression mode, the microcomputer 107 controls the compression/decompression circuit 104 to perform the image compression processing. Then, in step S403, the microcomputer 107 reads the exposure and flash information stored in step S210 and the white balance information stored in step S211 from the flash ROM 108. The data to be red is not only the information corresponding to the aspect ratio set by the user, but also information corresponding to the aspect ratios that are not set by the user.

In step S404, the microcomputer 107 writes the lossless compressed image data on the image recording medium 112. The image data is recorded in the format (RAW format) of the still image file. As header information of the data, the exposure and flash information and the white balance information corresponding to both of the aspect ratio set by the user and the aspect ratios that are not set by the user is recorded. Further, the image for display created in step S401 is also recorded. When the writing on the recording medium is completed, the recording processing routine ends.

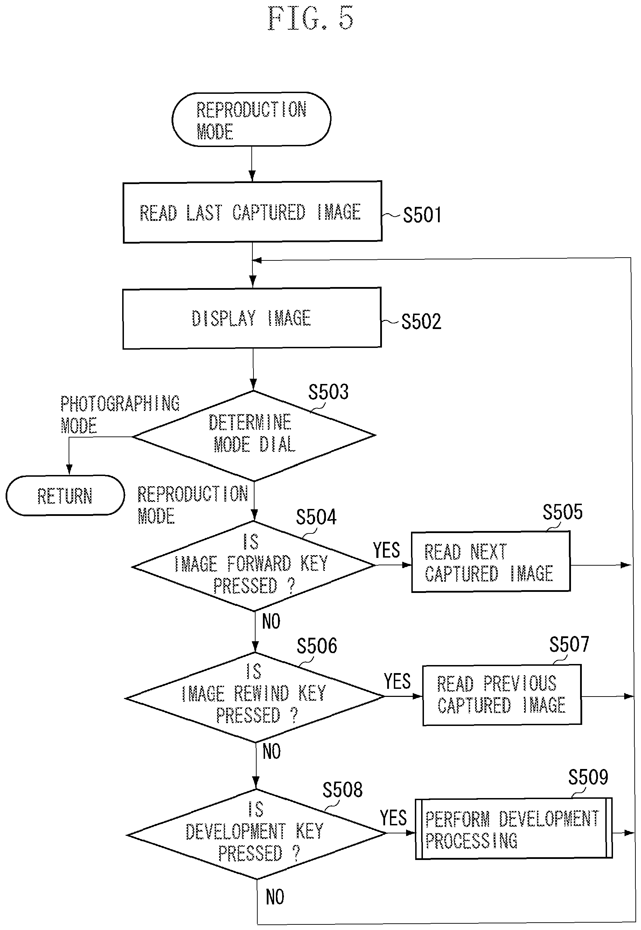

Fig. 5 is a flowchart illustrating an example of a reproducing procedure. In step S501, when the mode is in the reproduction mode, the microcomputer 107 reads the file of the data of the last captured image. In step S502, the microcomputer 107 performs control to display the display image in the file read in step S501 on the liquid crystal panel 106. In step S503, the microcomputer 107 determines the state of the mode dial. As a result of the determination, when the mode dial is changed to the image capturing mode, the processing returns to the main routine, and proceeds to the top of the image capturing processing.

On the other hand, as a result of the determination in step S503, when the mode is still in the reproduction mode, the processing proceeds to step S504. In step S504, the microcomputer 107 checks the state of the operation switch unit 111, and determines whether an image forward key is pressed or not. As a result of the determination, if the image forward key is pressed, the processing proceeds to step S505. In step S505, the microcomputer 107 reads the file of image data that is captured right after the image currently displayed is captured, from the image recording medium 112. Then, the processing returns to the processing in step S502.

As a result of the determination in step S504, if the image forward key is not pressed, the processing proceeds to step S506. In step S506, the microcomputer 107 determines whether an image rewind key is pressed or not. As a result of the determination, if the image rewind key is pressed, the processing proceeds to step S507. In step S507, the microcomputer 107 reads the file of image data that is captured right before the image currently displayed is captured, from the image recording medium 112. Then, the processing returns to step S502. As a result of the determination in step S506, if the image rewind key is not pressed, the processing proceeds to step S508.

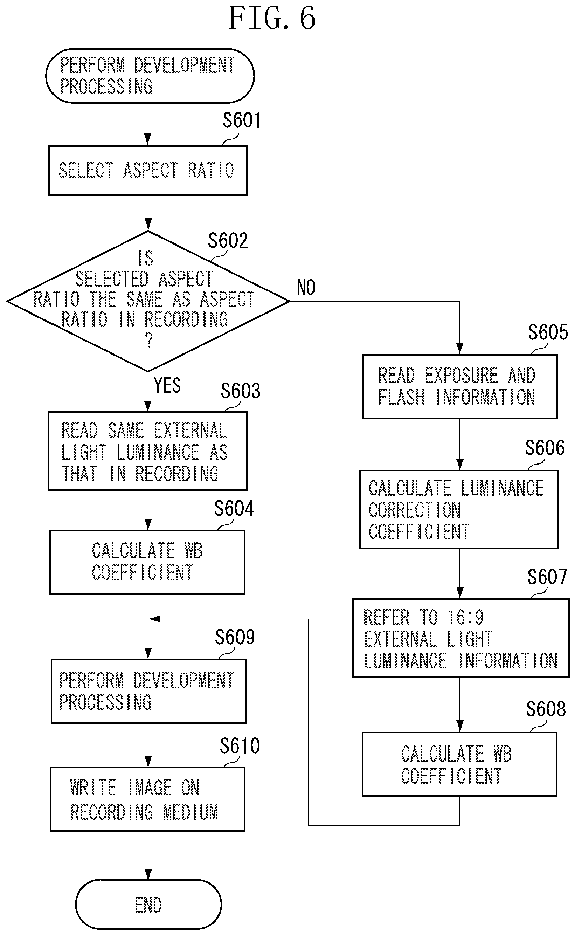

In step S508, the microcomputer 107 determines whether a key to start the developing processing is operated or not. As a result of the determination, if the key to start the developing processing is operated, the processing proceeds to step S509. In step S509, the microcomputer 107 temporarily stores an uncompressed image of the file being read, on the image recording medium 112, and using the camera signal processing unit 103 and the compression/decompression circuit 104, implements the developing processing. The developed image is compressed, or other processing is performed in the compression/decompression circuit 104, and the image is written in the image recording medium 112. The developing processing in step S509 will be described below in detail with reference to Fig. 6.

Fig. 6 is a flowchart illustrating detailed procedure of the developing processing in step S509 in Fig. 5. According to the embodiment, in the developing processing to be performed hereinafter, an aspect ratio (16:9) that is different from the aspect ratio (4:3) set at the time of the image capturing can be selected. When the developing processing is started, in step S601, the microcomputer 107 checks the aspect ratio at which a development process set via the operation switch unit 111 is performed. In step S602, the microcomputer 107 determines whether the result of the check is the same as the aspect ratio (4:3) at the time of recording. As a result of the determination, if the same aspect ratio as that at the time of recording is set, the processing proceeds to step S603. Then, the microcomputer 107 reads information of external light luminance and information and the exposure control amount at the aspect ratio the same as that at the time of recording, from the header.

In step S604, the microcomputer 107 calculates the white balance coefficient. More specifically, the microcomputer 107 divides an image in the area of the aspect ratio (4:3) at the time of recording into predetermined small block areas, and integrates each of the blocks with respect to RGB value. The microcomputer 107 calculates the white balance coefficient by obtaining an average value with respect to values in areas that can be considered as white among the integral values of the all blocks. The microcomputer 107 also reads the flash flag from the header. With reference to the flag, when the microcomputer 107 determines that the flash operation was performed, the microcomputer 107 calculates again the external light luminance of the area of the aspect ratio (4:3) at the time of recording from the image in the comprehensive area.

Then, the microcomputer 107 calculates a difference between the external light luminance read in step S603 and the recalculated external light luminance. The read external light luminance is obtained at the time of capturing the moving image just before the still image is captured, and in the state that the flash is not operated (S210 in Fig. 2). Accordingly, the difference value calculated in this step shows how the flashlight contributes to the still image. In the embodiment, , a flash white balance coefficient is calculated such that the white balance coefficient obtained based on the previously calculated color temperature (for example, 4500 K) at the image capturing scene is shifted more to the side of the coefficient corresponding to the flash light source (for example, 5000 K) as the difference value becomes greater.

Meanwhile, as a result of the determination in step S602, if the selected aspect ratio differs from the aspect ratio at the time of recording, the processing proceeds to step S605, and the microcomputer 107 reads the exposure and flash difference information at the selected aspect ratio (16:9). Then, the processing proceeds to step S606. In step S606, when the difference between the exposure control amounts exists, the microcomputer 107 calculates a correction value for performing luminance correction (digital gain correction). The correction amount of the luminance correction is determined by the following conversion equation (1):

$$\Delta\mathtt{Gain}\ =\ 2\ \hat{}\ \ (\Delta\mathtt{Ev})\dots(1)$$

Wherein, $\Delta$Gain: luminance correction digital gain, $\Delta$Ev: difference value of exposure control amount by aspect ratio. "^" means power.

In step S607, the microcomputer 107 refers to the external light luminance information at the selected aspect ratio (16:9) . In step S608, the microcomputer 107 calculates a white balance coefficient with respect to the area at the selected aspect ratio (16:9) using a method similar to that in step S604. Further, the microcomputer 107 refers to the flash flag. When the microcomputer 107 determines that the flash operation is being performed, using the external light luminance read in step S607, calculates a flash white balance coefficient similar to that in step S604. A difference from step S604 is that a difference value of luminance with respect to the area at the selected aspect ratio (16:9) is calculated. When each parameter is determined by implementing the processing in steps S603 and S604, or steps S605 to S608, then, in step S609, the microcomputer 107 performs developing processing on the area of the set or changed aspect ratio using the parameters.

In step S610, the microcomputer 107 controls the compression/decompression circuit 104 such that images of each aspect ratio generated in step S609 are compressed in JPEG format. In step S610, the image is written on the image recording medium 112. As described above, in the embodiment of the present invention, the photographic information at an aspect ratio other than the set aspect ratio is acquired before a still image is captured. Accordingly, when the image is developed at a different aspect ratio, appropriate photographic information can be used ex-post facto. Accordingly, a higher-quality image can be obtained. If an image of the comprehensive area is obtained, it is possible to cut an area at a desired aspect ratio and estimates ex-post facto photographic information from the image. However, as described in the embodiment, if photographic information used in an actual control is used, more accurate image can be obtained. Especially, as described in the embodiment, when a still image obtained in actual image capturing differs from an image (through-image) for acquiring photographic information, the method according to the embodiment of the present invention is effective.

Other Embodiments

In the above embodiment, the developing processing is performed within the camera as an example. Further, other aspect ratios, for example, 1:1 can be used. Further, regarding the areas of the image cut by the aspect ratios, in the example in Fig. 7, the area is set such that the number of the recording pixels is the same at all aspect ratios. However, it is possible to set the image cut areas such that the number of recording pixels can be increased or decreased when the aspect ratio setting is changed. Further, in the above-described embodiment of the present invention, as an example, a still image is captured during moving image capturing. However, the invention is not limited to the example. For example, the present invention can be similarly applied if the display operation of a-image is performed using a frame before still image is captured. For example, the present invention is applicable when a still image is captured during electronic view finder function that does not perform recording is being performed. Further, the timing to store the exposure and flash, white balance, and focusing information is not limited to the above-described embodiment. For example, by half-pressing (SW1) a still image release button, the information can be stored at timing that AE, AWB, and AF control information is locked. Further, in the above-described embodiment, as the RAW format, lossless compression image data is recorded. However, uncompressed image data can also be recorded. Further, in the above-described embodiment, recording of the photographic information in the file header is described. However, the present invention is not limited to the case. For example, if the microcomputer records the photographic information separately from the image file, and the relationship between the image file can be maintained, for example, the relationship between the image file and the photographic information is written in a table, then the photographic information can be recorded by other methods.

Other Embodiments

Aspects of the present invention can also be realized by a computer of a system or apparatus (or devices such as a CPU or MPU) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to embodiments, it is to be understood that the invention is not limited to the disclosed embodiments. The scope of the following claims is to be accorded the broadest interpretation so as to encompass all modifications, equivalent structures, and functions.

**Claims**

1. An imaging apparatus (100) comprising:

    a setting means (111) configured to set a first aspect ratio as information at the time of recording a captured image;
    an acquisition means (107) configured to acquire first photographic information for shooting at the first aspect ratio and second photographic information for shooting at a second aspect ratio that is different from the first aspect ratio;
    a control means (107) configured to perform control such that an image in a comprehensive area including the first aspect ratio and the second aspect ratio which is captured based on the first photographic information, the first photographic information, and the second photographic information are associated with each other and recorded on a recording medium(112);
    a reading means (107) configured to read the first photographic information, the second photographic information, and the image in the comprehensive area from the recording medium (112);
    a selection means (111) configured to select an aspect ratio for developing the captured image; and
    a developing means (103) configured to develop the captured image of the area at the second aspect ratio in the comprehensive area using the second photographic information when the second aspect ratio is selected by the selection means.

2. The imaging apparatus (100) according to claim 1, wherein the first and second photographic information are calculated based on an image acquired during displaying a through-image.

3. The imaging apparatus (100) according to claim 1, wherein the first photographic information includes external light luminance and exposure control amounts.

4. The imaging apparatus (100) according to claim 3, wherein the second photographic information includes a difference between the exposure control amounts.

5. The imaging apparatus (100) according to claim 1, wherein the second photographic information includes information about flash operation or non-flash operation.

6. The imaging apparatus (100) according to claim 1, wherein the control means writes the first photographic information and the second photographic information in a header of a file of the captured image.

7. The imaging apparatus according to claim 1, wherein the second photographic information is difference of an exposure control amount from an exposure control amount corresponding to the first photographic information.

8. A control method for an imaging apparatus (100), the control method comprising:

setting a first aspect ratio as information at the time of recording a captured image;
acquiring first photographic information for shooting at the first aspect ratio and second photographic information for shooting at a second aspect ratio that is different from the first aspect ratio;
performing control such that an image in a comprehensive area including the first aspect ratio and the second aspect ratio which is captured based on the first photographic information, the first photographic information, and the second photographic information are associated with each other and recorded on a recording medium (112);
reading the first photographic information, the second photographic information, and the image in the comprehensive area from the recording medium (112);
selecting an aspect ratio for developing the captured image; and
developing the captured image of the area at the second aspect ratio in the comprehensive area using the second photographic information when the second aspect ratio is selected in the selection.

**Patentansprüche**

1. Bildgebungsvorrichtung (100) umfassend:

eine Einstelleinrichtung (111), die konfiguriert ist, ein erstes Seitenverhältnis als Information zum Zeitpunkt des Aufzeichnens eines aufgenommenen Bilds einzustellen;
eine Erfassungseinrichtung (107), die konfiguriert ist, eine erste Fotografierinformation zur Aufnahme mit dem ersten Seitenverhältnis und eine zweite Fotografierinformation zur Aufnahme mit einem zweiten Seitenverhältnis, das sich vom ersten Seitenverhältnis unterscheidet, zu erfassen;
eine Steuereinrichtung (107), die konfiguriert ist, eine Steuerung dergestalt durchzuführen, dass ein basierend auf der ersten Fotografierinformation aufgenommenes Bild in einem Umfassungsbereich einschließlich des ersten Seitenverhältnisses und des zweiten Seitenverhältnisses, die erste Fotografierinformation und die zweite Fotografierinformation miteinander verbunden und auf einem Aufzeichnungsmedium (112) aufgezeichnet werden;
eine Leseeinrichtung (107), die konfiguriert ist, die erste Fotografierinformation, die zweite Fotografierinformation und das Bild im Umfassungsbereich vom Aufzeichnungsmedium (112) zu lesen;
eine Auswahleinrichtung (111), die konfiguriert ist, ein Seitenverhältnis zum Entwickeln des aufgenommenen Bilds auszuwählen; und
eine Entwicklungseinrichtung (103), die konfiguriert ist, das aufgenommene Bild des Bereichs mit dem zweiten Seitenverhältnis im Umfassungsbereich unter Verwendung der zweiten Fotografierinformation zu entwickeln, wenn das zweite Seitenverhältnis von der Auswahleinrichtung ausgewählt wird.

2. Bildgebungsvorrichtung (100) nach Anspruch 1, wobei die erste und die zweite Fotografierinformation basierend auf einem während der Anzeige eines Durchgangsbilds erfassten Bild berechnet werden.

3. Bildgebungsvorrichtung (100) nach Anspruch 1, wobei die erste Fotografierinformation externe Lichtluminanz und Belichtungssteuerbeträge enthält.

4. Bildgebungsvorrichtung (100) nach Anspruch 3, wobei die zweite Fotografierinformation eine Differenz zwischen den Belichtungssteuerbeträgen enthält.

5. Bildgebungsvorrichtung (100) nach Anspruch 1, wobei die zweite Fotografierinformation Information über eine Blitzoperation oder eine Nichtblitzoperation enthält.

6. Bildgebungsvorrichtung (100) nach Anspruch 1, wobei die Steuereinrichtung die erste Fotografierinformation und die zweite Fotografierinformation in einen Header einer Datei des aufgenommenen Bilds schreibt.

7. Bildgebungsvorrichtung nach Anspruch 1, wobei die zweite Fotografierinformation eine Differenz eines Belichtungssteuerbetrags von einem der ersten Fotografierinformation entsprechenden Belichtungssteuerbetrag ist.

8. Steuerverfahren für eine Bildgebungsvorrichtung (100), wobei das Steuerverfahren umfasst:
Einstellen eines ersten Seitenverhältnisses als Information zum Zeitpunkt des Aufzeichnens eines aufgenommenen Bilds;

Erfassen einer ersten Fotografierinformation zur Aufnahme mit dem ersten Seitenverhältnis und einer zweiten Fotografierinformation zur Aufnahme mit einem zweiten Seitenverhältnis, das sich vom ersten Seitenverhältnis unterscheidet;

Durchführen einer Steuerung dergestalt, dass ein basierend auf der ersten Fotografierinformation aufgenommenes Bild in einem Umfassungsbereich einschließlich des ersten Seitenverhältnisses und des zweiten Seitenverhältnisses, die erste Fotografierinformation und die zweite Fotografierinformation miteinander verbunden und auf einem Aufzeichnungsmedium (112) aufgezeichnet werden;

Lesen der ersten Fotografierinformation, der zweiten Fotografierinformation und des Bilds im Umfassungsbereich vom Aufzeichnungsmedium (112);

Auswählen eines Seitenverhältnisses zum Entwickeln des aufgenommenen Bilds; und

Entwickeln des aufgenommenen Bilds des Bereichs mit dem zweiten Seitenverhältnis im Umfassungsbereich unter Verwendung der zweiten Fotografierinformation, wenn das zweite Seitenverhältnis bei der Auswahl ausgewählt wird.

**Revendications**

1. Appareil de formation d'images (100) comprenant :

un moyen de réglage (111) configuré pour régler un premier rapport de dimensions en tant qu'informations au moment de l'enregistrement d'une image capturée ;

un moyen d'acquisition (107) configuré pour acquérir des premières informations photographiques destinées à une prise de vue selon le premier rapport de dimensions et des secondes informations photographiques destinées à une prise de vue selon un second rapport de dimensions qui est différent du premier rapport de dimensions ;

un moyen de commande (107) configuré pour effectuer une commande de façon qu'une image se trouvant dans une zone globale comprenant le premier rapport de dimensions et le second rapport de dimensions, qui est capturée sur la base des premières informations photographiques, que les premières informations photographiques et que les secondes informations photographiques soient associées les unes aux autres et enregistrées sur un support d'enregistrement (112) ;

un moyen de lecture (107) configuré pour lire les premières informations photographiques, les secondes informations photographiques et l'image se trouvant dans la zone globale depuis le support d'enregistrement (112) ;

un moyen de sélection (111) configuré pour sélectionner un rapport de dimensions destiné au développement de l'image capturée ; et

un moyen de développement (103) configuré pour développer l'image capturée de la zone présentant le second rapport de dimensions dans la zone globale en utilisant les secondes informations photographiques lorsque le second rapport de dimensions est sélectionné par le moyen de sélection.

2. Appareil de formation d'images (100) selon la revendication 1, dans lequel les premières et secondes informations photographiques sont calculées sur la base d'une image acquise pendant l'affichage d'une image passante.

3. Appareil de formation d'images (100) selon la revendication 1, dans lequel les premières informations photographiques contiennent une luminance de la lumière extérieure et des niveaux de commande d'exposition.

4. Appareil de formation d'images (100) selon la revendication 3, dans lequel les secondes informations photographiques contiennent une différence entre les niveaux de commande d'exposition.

5. Appareil de formation d'images (100) selon la revendication 1, dans lequel les secondes informations photographiques contiennent des informations concernant un fonctionnement avec flash ou un fonctionnement sans flash.

6. Appareil de formation d'images (100) selon la revendication 1, dans lequel le moyen de commande écrit les premières informations photographiques et les secondes informations photographiques dans un en-tête d'un fichier de l'image capturée.

7. Appareil de formation d'images (100) selon la revendication 1, dans lequel les secondes informations photographiques sont une différence de niveau de commande d'exposition par rapport à un niveau de commande d'exposition correspondant aux premières informations photographiques.

8. Procédé de commande destiné à un appareil de formation d'images (100), le procédé de commande consistant à :

régler un premier rapport de dimensions en tant qu'informations au moment de l'enregistrement d'une image capturée ;

acquérir des premières informations photographiques destinées à une prise de vue selon le premier rapport de dimensions et des secondes informations photographiques destinées à une prise de vue selon un second rapport de dimensions qui est différent du premier rapport de dimensions ;

effectuer une commande de façon qu'une image se trouvant dans une zone globale comprenant le premier rapport de dimensions et le second rapport de dimensions, qui est capturée sur la base des premières informations photographiques, que les premières informations photographiques et que les secondes informations photographiques soient associées les unes aux autres et enregistrées sur un support d'enregistrement (112) ;

lire les premières informations photographiques, les secondes informations photographiques et l'image se trouvant dans la zone globale depuis le support d'enregistrement (112) ;

sélectionner un rapport de dimensions destiné au développement de l'image capturée ; et

développer l'image capturée de la zone présentant le second rapport de dimensions dans la zone globale en utilisant les secondes informations photographiques lorsque le second rapport de dimensions est sélectionné lors de la sélection.

FIG. 1

# FIG. 2

```
                                    ┌─────────────────┐
                                    │ CAPTURE MOVING  │
                                    │     IMAGE       │
                                    └────────┬────────┘
                                             │
                                             │        S201
                                    ┌────────▼────────┐
                                    │   READ IMAGE    │
                                    └────────┬────────┘
                                             │
                                             │        S202
              NO                    ╱────────▼────────╲
        ┌───────────────────────────        IS        ╲
        │                           ╲   EXPOSURE OK    ╱
        │                            ╲       ?        ╱
        │       S203                  ╲──────┬───────╱
   ┌────▼────────┐                         YES │          S210
   │  PERFORM    │                    ┌────────▼────────────┐
   │  AE CONTROL │                    │ PERFORM EXPOSURE AND│
   └────┬────────┘                    │ FLASH INFORMATION   │
        │                             │ STORAGE CONTROL     │
        │          S204               └────────┬────────────┘
  NO  ╱─▼──────────╲                           │
 ┌────       IS      ╲                         │
 │    ╲  FLASH NEEDED ╱                        │          S206
 │     ╲     ?       ╱                ╱────────▼────────╲
 │      ╲────┬──────╱           NO   ╱        IS         ╲
 │        YES │             ┌─────────   WHITE BALANCE    ╱
 │            │  S205       │        ╲      OK ?         ╱
 │     ┌──────▼──────┐      │         ╲──────┬─────────╱
 │     │   CHARGE    │      │              YES │          S211
 │     │   FLASH     │      │         ┌────────▼──────────┐
 │     └──────┬──────┘      │         │ STORE WHITE BALANCE│
 │            │             │         │ INFORMATION        │
 │            │    S207      │        └────────┬──────────┘
 │     ┌──────▼──────┐      │                  │
 │     │   PERFORM   │◄─────┘                  │          S208
 │     │  AWB CONTROL│                ╱────────▼────────╲
 │     └──────┬──────┘           NO  ╱        IS         ╲
 │            │             ┌─────────    FOCUSING OK     ╱
 │            │    S209      │        ╲       ?          ╱
 │     ┌──────▼──────┐      │         ╲──────┬─────────╱
 └─────┤   PERFORM   │      │              YES │
       │  AF CONTROL │      │         ┌────────▼────────┐
       └─────────────┘      │         │     RETURN      │
                            │         └─────────────────┘
                            └─┐
                              │
```

FIG. 3

```
        ┌──────────────────────┐
        │  CAPTURE STILL IMAGE  │
        └──────────────────────┘
                   │
                   ▼
        ┌──────────────────────┐
        │    RELEASE SHUTTER    │ ～S301
        └──────────────────────┘
                   │
                   ▼
        ┌──────────────────────┐
        │    START EXPOSURE     │ ～S302
        └──────────────────────┘
                   │
                   ▼
              S303
          ╱──────────╲
    NO   ╱     IS      ╲
◄───────    FLASH NEEDED
         ╲      ?      ╱
          ╲──────────╱
               │ YES
               ▼
        ┌──────────────────────┐
        │      EMIT LIGHT       │ ～S304
        └──────────────────────┘
               │
               ▼
              S305
          ╱──────────╲
         ╱     IS      ╲   NO
         EXPOSURE COMPLETED ──────►
         ╲      ?      ╱
          ╲──────────╱
               │ YES
               ▼
        ┌──────────────────────┐
        │     CLOSE SHUTTER     │ ～S306
        └──────────────────────┘
               │
               ▼
        ┌──────────────────────┐
        │  WRITE DATA ON MEMORY │ ～S307
        └──────────────────────┘
               │
               ▼
        ┌──────────────────────┐
        │ PERFORM COLOR PROCESSING │ ～S308
        └──────────────────────┘
               │
               ▼
        ┌──────────────────────┐
        ║   PERFORM RECORDING   ║ ～S309
        ║      PROCESSING       ║
        └──────────────────────┘
               │
               ▼
        ┌──────────────────────┐
        │        RETURN         │
        └──────────────────────┘
```

# FIG. 4

```
┌─────────────────────────┐
│  PERFORM RECORDING      │
│  PROCESSING             │
└─────────────────────────┘
            │
            ▼
┌─────────────────────────┐
│  GENERATE DISPLAY       │── S401
│  IMAGE                  │
└─────────────────────────┘
            │
            ▼
┌─────────────────────────┐
│  PERFORM                │── S402
│  COMPRESSION            │
└─────────────────────────┘
            │
            ▼
┌─────────────────────────┐
│  READ EXPOSURE,         │
│  FLASH, AND WB          │── S403
│  INFORMATION            │
└─────────────────────────┘
            │
            ▼
┌─────────────────────────┐
│  WRITE DATA ON          │── S404
│  RECORDING MEDIUM       │
└─────────────────────────┘
            │
            ▼
┌─────────────────────────┐
│       RETURN            │
└─────────────────────────┘
```

## FIG. 5

# FIG. 6

PERFORM DEVELOPMENT
PROCESSING

S601

SELECT ASPECT RATIO

S602

IS
SELECTED ASPECT
RATIO THE SAME AS ASPECT
RATIO IN RECORDING
?

NO

YES

S603

READ SAME EXTERNAL
LIGHT LUMINANCE AS
THAT IN RECORDING

S604

CALCULATE WB
COEFFICIENT

S605

READ EXPOSURE AND
FLASH INFORMATION

S606

CALCULATE LUMINANCE
CORRECTION
COEFFICIENT

S607

REFER TO 16:9
EXTERNAL LIGHT
LUMINANCE INFORMATION

S608

CALCULATE WB
COEFFICIENT

S609

PERFORM DEVELOPMENT
PROCESSING

S610

WRITE IMAGE ON
RECORDING MEDIUM

END

FIG. 7

COMPREHENSIVE AREA

4:3

3:2

16:9

EP 2 282 524 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007110695 A